# EUROPÄISCHE PATENTSCHRIFT

(11) **EP 3 856 575 B1**
(45) Veröffentlichungstag und Bekanntmachung des Hinweises auf die Patenterteilung: **06.11.2024**
(21) Anmeldenummer: 19733793.4
(22) Anmeldetag: 28.06.2019
(51) Int. Cl.: B32B 17/10

(54) **BAUTEIL MIT ELEKTRISCHEN FUNKTIONSELEMENTEN FÜR DIE FERTIGUNG EINER VERBUNDSCHEIBE**
COMPONENT WITH ELECTRIC FUNCTIONAL ELEMENTS FOR THE PRODUCTION OF A LAMINATED GLAZING
COMPOSANT POURVU D'ÉLÉMENTS FONCTIONNELS ÉLECTRIQUES DESTINÉ À LA FABRICATION D'UNE VITRE FEUILLETÉE

(30) Priorität: 25.09.2018 EP 18196453
(43) Veröffentlichungstag der Anmeldung: 04.08.2021
(73) Patentinhaber: Saint-Gobain Glass France, 92400 Courbevoie (FR)
(72) Erfinder: VARGA, Gabor, 52134 Herzogenrath (DE); KLAUSS, Bastian, 52134 Herzogenrath (DE); CRAIG, Doane, Shelby, 52072 Aachen (DE); EFFERTZ, Christian, 52080 Aachen (DE)
(74) Vertreter: Feist, Florian Arno
(86) Internationale Anmeldenummer: PCT/EP2019/067276
(87) Internationale Veröffentlichungsnummer: WO 2020/064158

(56) Entgegenhaltungen:
- EP-A1- 3 031 671
- WO-A1-2013/053629
- DE-A1- 19 746 526
- US-A1- 2014 374 401

## Beschreibung

Die Erfindung betrifft ein Bauteil zur oder für die Fertigung einer Verbundscheibe, eine damit ausgestattete Verbundscheibe und ein Verfahren zur Herstellung einer Verbundscheibe unter Verwendung des Bauteils.

Fahrzeugscheiben, insbesondere Windschutzscheiben, werden zunehmend mit elektrischen Funktionselementen ausgestattet. Eine Windschutzscheibe ist als Verbundscheibe ausgebildet und besteht aus zwei Glasscheiben, die über einer thermoplastischen Folie miteinander verbunden sind. Die elektrischen Funktionselemente können entweder in die Verbundscheibe einlaminiert sein, also zwischen den beiden Glasscheiben angeordnet sein (interne Funktionselemente), oder an einer Außenfläche der Verbundscheibe angebracht sein (externe Funktionselemente). Beispiele für interne Funktionselemente sind Lichtsensoren zur automatischen Steuerung der Fahrzeugbeleuchtung, kapazitive Regensensoren zur automatischen Steuerung der Scheibenwischer oder nach innen gerichtete LEDs als Anzeigeelemente. Beispiele für externe Funktionselemente sind Luftfeuchtigkeits- oder Temperatursensoren. Lichtsensoren sind beispielsweise in EP2100722A2, WO2017097536A1 und WO2017097537A1 beschrieben, kapazitive Regensensoren beispielsweise in US4703237A, DE102006000215A1 und DE102009029602A1, integrierte LEDs beispielsweise in WO2017203132A1, WO2018077546A1 und WO2018002723A1, Luftfeuchtigkeitssensoren beispielsweise in DE102011018485A1. WO2013053629A1 offenbart eine Verbundscheibe mit in der Zwischenschicht angeordneten LEDs.

Die Herstellung der Fahrzeugscheiben wird durch die Integration der elektrischen Funktionselemente erheblich aufwendiger gestaltet. Wenn mehrere Funktionselemente integriert werden soll, muss jedes einzelne Funktionselement typischerweise händisch in der vorgesehenen Position angeordnet werden. Die elektrischen Zuleitungen der Funktionselemente, typischerweise als Flachleiter ausgebildet, müssen auf die vorgesehene Weise über den Scheibenrand hinausgeführt werden und später einzeln mit der Bordelektrik verbunden werden.

Der vorliegenden Erfindung liegt die Aufgabe zugrunde, ein Bauteil mit elektrischen Funktionselementen bereitzustellen, welches die Herstellung der Verbundscheibe vereinfacht, sowie ein darauf basierendes Herstellungsverfahren.

Die Aufgabe der vorliegenden Erfindung wird erfindungsgemäß durch ein Verfahren gemäß Anspruch 1 und durch eine Verbundscheibe gemäß Anspruch 11 gelöst. Bevorzugte Ausführungen gehen aus den Unteransprüchen hervor.

Das Bauteil ist für die Fertigung einer Verbundscheibe vorgesehen. Das Bauteil umfasst mindestens zwei elektrische Funktionselemente. Jedes Funktionselement ist mit einem oder mehreren elektrischen Leitern elektrisch leitend verbunden, welche dafür vorgesehen und geeignet sind, das Funktionselement elektrisch zu kontaktieren und mit einer externen Spannungsquelle, einem Bezugspotential, einer externen Auswerteelektronik oder ähnlichem elektrisch zu verbinden. Die Gesamtheit der elektrischen Leiter und ihrer isolierenden Ummantelungen wird im Sinne der Erfindung als Verkabelung bezeichnet.

Erfindungsgemäß weist die Verkabelung des Bauteils einen Abschnitt auf, in dem alle elektrischen Leiter aller Funktionselemente von einer gemeinsamen isolierenden Ummantelung umgeben sind. Dieser Abschnitt wird im Sinne der Erfindung als Bündelabschnitt bezeichnet. Der Abschnitt mit der gemeinsamen Ummantelung bündelt gleichsam alle elektrischen Zuleitungen und die damit verbundenen Funktionselemente, so dass in der Fertigung anstatt mit einer Vielzahl von Bauteilen (jeweils umfassend ein Funktionselement und seine Zuleitung) nur mit einem einzelnen Bauteil umgegangen werden muss. Insbesondere kann die relative Anordnung der einzelnen Funktionselemente zueinander unter Berücksichtigung von Scheiben- und Foliendicken der herzustellenden Verbundscheibe so gewählt werden, dass sich ihre vorgesehene Positionierung mehr oder weniger selbstständig ergibt, wenn das Bauteil an einer Seitenkante der herzustellenden Verbundscheibe positioniert wird, und nicht jedes einzelne Bauteil aufwändig positioniert werden muss. Dadurch wird die Herstellung der Verbundscheibe erheblich vereinfacht, worin ein großer Vorteil der vorliegenden Erfindung zu sehen ist.

Die herzustellende Verbundscheibe ist bevorzugt eine Fahrzeug-Verbundscheibe, besonders bevorzugt eine Fahrzeug-Windschutzscheibe, insbesondere die Windschutzscheibe eines Kraftfahrzeugs, beispielsweise eines Personenkraftwagens, Lastkraftwagens oder Schienenfahrzeugs. Die Erfindung ist grundsätzlich aber auch auf andere Fahrzeugscheiben anwendbar, beispielsweise Dachscheiben, Seitenscheiben oder Rückscheiben, sofern diese als Verbundscheiben ausgebildet sind. Ferner ist die Erfindung anwendbar auf Verbundscheiben in anderen Bereichen, beispielsweise im Bau-, Architektur- oder Innenbereich.

Eine Verbundscheibe umfasst eine erste und einer zweite starre Scheibe, insbesondere Glasscheibe, die über eine thermoplastische Zwischenschicht miteinander verbunden sind. Die thermoplastische Zwischenschicht ist typischerweise aus mindestens einer thermoplastischen Folie ausgebildet. Ist die Verbundscheibe als Fensterscheibe vorgesehen, wie beispielsweise eine Fahrzeug-Windschutzscheibe, und somit zur Abtrennung eines Innenraums (Fahrzeuginnenraums) von einer äußeren Umgebung vorgesehen, so können die beiden starren Scheiben als Außenscheibe und Innenscheibe bezeichnet werden. Mit Innenscheibe wird diejenige Scheibe bezeichnet, welche in Einbaulage dem Innenraum zugewandt ist. Mit Außenscheibe wird diejenige Scheibe bezeichnet, welche in Einbaulage der äußeren Umgebung zugewandt ist. Diejenige Oberfläche der jeweiligen Scheibe, welche in Einbaulage der äußeren Umgebung zugewandt ist, wird als außenseitige Oberfläche bezeichnet. Diejenige Oberfläche der jeweiligen Scheibe, welche in Einbaulage dem Innenraum zugewandt ist, wird als innenraumseitige Oberfläche bezeichnet. Die innenraumseitige Oberfläche der Außenscheibe ist über die thermoplastische Zwischenschicht mit der außenseitigen Oberfläche der Innenscheibe verbunden. Üblicherweise wird die außenseitige Oberfläche der Außenscheibe als "Seite I" bezeichnet, die innenraumseitige Oberfläche der Außenscheibe als "Seite II", die außenseitige Oberfläche der Innenscheibe als "Seite III" und die innenraumseitige Oberfläche der Innenscheibe als "Seite IV".

Ausgehend vom Bündelabschnitt des Bauteils mit der gemeinsamen isolierenden Ummantelung zweigen die Zuleitungen der einzelnen Funktionselemente gleichsam ab. Direkt an jedes Funktionselement schließt sich ein Abschnitt an, in dem der oder die elektrischen Leiter des besagten Funktionselements von einer eigenen isolierenden Ummantelung umgeben sind, welche keine elektrischen Leiter des oder der übrigen Funktionselemente umgibt. Diese Abschnitte der Verkabelung werden im Sinne der Erfindung als Individualabschnitte bezeichnet. Diese Abschnitte münden gleichsam in den Bündelabschnitt mit der gemeinsamen Ummantelung ein, welcher die Funktionselemente mit Zuleitungen zu einem einzigen Bauteil bündelt und die Abstände der Funktionselemente zueinander fixiert. Die Verkabelung wird also ausgehend vom Bündelabschnitt in Richtung der Funktionselemente verzweigt oder aufgefächert, wobei direkt vor jedem Funktionselement ein zugehöriger Individualabschnitt angeordnet ist.

Umfasst das Bauteil mehr als zwei Funktionselemente, so kann das Einmünden der Zuleitungen in den Bündelabschnitt mit der gemeinsamen Ummantelung, beziehungsweise das Verzweigen/Auffächern der Zuleitungen ausgehend vom Bündelabschnitt, in einer vorteilhaften Ausgestaltung schrittweise erfolgen. In diesem Fall existiert mindestens ein Abschnitt, in dem die elektrischen Leiter mehrerer, aber nicht aller Funktionselemente durch eine gemeinsame Ummantelung zusammengefasst sind. Dieser Abschnitt wird im Sinne der Erfindung als Teilbündelabschnitt der Verkabelung bezeichnet. Ausgehend vom Bündelabschnitt zweigt zunächst der Individualabschnitt eines Funktionselements ab, während die Zuleitungen der übrigen Funktionselemente im Teilbündelabschnitt zunächst weiter in einer gemeinsamen isolierenden Ummantelung verlaufen und später in ihre Individualabschnitte verzweigt werden. Ausgehend vom Bündelabschnitt verzweigt sich die Verkabelung also in den Individualabschnitt eines Funktionselements und einen Teilbündelabschnitt der übrigen Funktionselemente. Anders ausgedrückt schließt sich an den Bündelabschnitt, in dem alle elektrischen Leiter von einer gemeinsamen isolierenden Ummantelung umgeben sind, der Individualabschnitt eines Funktionselements an, in dem der oder die elektrischen Leiter des besagten Funktionselements von einer eigenen isolierenden Ummantelung umgeben sind, welche keine elektrischen Leiter des oder der übrigen Funktionselemente umgibt, und ein Teilbündelabschnitt, in dem die elektrischen Leiter der übrigen Funktionselemente von einer gemeinsamen isolierenden Ummantelung umgeben sind.

Die Verkabelung umfasst also einen Bündelabschnitt und für jedes Funktionselement einen Individualabschnitt, wobei sich die Individualabschnitte direkt oder über einen Teilbündelabschnitt an den Bündelabschnitt anschließen.

Alle Funktionselemente und ihre jeweiligen elektrischen Zuleitungen sind bevorzugt auf derselben Seite des Abschnitts mit der gemeinsamen isolierenden Ummantelung angeordnet. Umfasst das Bauteil mindestens drei Funktionselemente, so existiert genau eine Möglichkeit, das Bauteil in einer Weise aufzufalten, dass von der Verbindungslinie zwischen dem Bündelabschnitt mit der gemeinsamen isolierenden Ummantelung aller elektrischen Leiter und einem Funktionselement, insbesondere dem am weitesten davon entfernten Funktionselement (also dem Funktionselemente mit der längsten Zuleitung aus Individualabschnitt und etwaigen Teilbündelabschnitten) alle Individualabschnitte der übrigen Funktionselemente von der gleichen Seite abzweigen. Die Funktionselemente können in der sich ergebenden Reihenfolge durchnummeriert werden, beginnend bei dem Funktionselement, das den Endpunkt der besagten Verbindungslinie bildet. Diese Reihenfolge entspricht der vorgesehenen Anordnung in der herzustellenden Verbundscheibe.

Das Bauteil umfasst zumindest ein internes elektrisches Funktionselement. In einer besonders bevorzugten Ausgestaltung umfasst das Bauteil mindestens ein internes und mindestens ein externes elektrisches Funktionselement. Unter einem internen Funktionselement wird ein Funktionselement verstanden, das zur Einlagerung in die Verbundscheibe vorgesehen ist, also zwischen den Einzelscheiben der Verbundscheibe angeordnet werden und in den Verbund einlaminiert werden soll. Unter einem externen Funktionselement wird ein Funktionselement verstanden, das dafür vorgesehen ist, äußerlich an der Verbundscheibe befestigt zu werden, also an einer von der Zwischenschicht abgewandten Oberfläche einer der Einzelscheiben angebracht werden soll. Gerade die Kombination externer und interner Funktionselemente gestaltet die herkömmliche Herstellung der Verbundscheiben aufwändig, so dass die vorliegende Erfindung in diesem Fall ihre Vorteile in besonderer Weise entfaltet.

Umfasst das Bauteil mindestens drei Funktionselemente, so ist in einer bevorzugten Ausgestaltung das mittlere oder zumindest eines der mittleren Funktionselemente gemäß der vorstehend beschriebenen Nummerierung als elektrisches Abschirmelement ausgebildet, um Interferenzen, Kopplungen ("Übersprechen") oder sonstige Störungen zwischen den äußeren Funktionselementen zu vermeiden. Das Bauteil weist bevorzugt mindestens zwei interne Funktionselemente, darunter das Abschirmelement, und mindestens ein externes Funktionselement auf.

Umfasst das Bauteil mindestens drei Funktionselemente, darunter ein externes und mehrere interne Funktionselemente, so zweigt bevorzugt ausgehend vom Bündelabschnitt mit der gemeinsamen isolierenden Ummantelung zunächst der Individualabschnitt des externen Funktionselements ab, während die Zuleitungen der internen Funktionselemente zunächst weiter in einem Teilbündelabschnitt mit einer gemeinsamen isolierenden Ummantelung verlaufen und später in die entsprechenden Individualabschnitte verzweigt werden. Anders ausgedrückt schließt sich an den Bündelabschnitt der Individualabschnitt des externen Funktionselements an und ein Teilbündelabschnitt der internen Funktionselemente. Die Reihenfolge gemäß der vorstehend beschriebenen Nummerierung der Funktionselemente entspricht bevorzugt der Anordnung der Funktionselemente in der herzustellenden Verbundscheibe in der Richtung von Außenscheibe zu Innenscheibe, da externe Funktionselemente typischerweise an der innenraumseitigen Oberfläche angebracht werden.

Dort sind sie geringeren mechanischen Belastungen ausgesetzt als an der außenseitigen Oberfläche und können beispielsweise als Sensoren Messwerte zum Zustand im Innenraum liefern.

In einer besonders bevorzugten Ausgestaltung umfasst das Bauteil genau drei Funktionselemente, nämlich ein externes Funktionselement und zwei interne Funktionselemente. Gemäß der vorstehend beschriebenen Nummerierung ist das erste Funktionselement ein internes Funktionselement und dafür vorgesehen, am nächsten zur Außenscheibe der Verbundscheibe positioniert zu werden, insbesondere zwischen Außenscheibe und thermoplastischer Zwischenschicht. Das zweite Funktionselement ist ein internes Funktionselement und dafür vorgesehen, zwischen der Innenscheibe und der thermoplastischen Zwischenschicht positioniert zu werden. Das dritte Funktionselement ist ein externes Funktionselement und dafür vorgesehen, äußerlich an der Innenscheibe der Verbundscheibe angebracht zu werden.

interne Funktionselemente sind in der Verbundscheibe durch die Zwischenschicht fixiert, während externe Funktionselemente äußerlich befestigt werden müssen. In einer vorteilhaften Ausgestaltung ist das externe Funktionselement und/oder der Individualabschnitt des externen Funktionselements, in dem der oder die elektrischen Leiter des externen elektrischen Funktionselements von einer eigenen isolierenden Ummantelung umgeben sind, welche keine elektrischen Leiter des oder der übrigen Funktionselemente umgibt, mit einem Klebstoff versehen. Der Klebstoff kann beispielsweise als Schicht einer Klebemasse oder als doppelseitiges Klebeband ausgebildet sein. Der Klebstoff ist auf der Seite des Zuleitungsabschnitts angeordnet, der den Zuleitungen des mindestens einen internen Funktionselements zugewandt ist.

Alle Funktionselemente und ihre einzelnen Zuleitungen sind bevorzugt auf derselben Seite des Abschnitts mit der gemeinsamen isolierenden Ummantelung angeordnet. Auf der anderen Seite dieses Abschnitts sind die elektrischen Leiter (genauer gesagt die von den Funktionselementen abgewandten Enden der Leiter) bevorzugt mit einem elektrischen Steckverbinder ("weibliche" Kupplung oder "männlicher" Stecker) versehen zum Anschluss an eine externe Elektrik, beispielsweise die Bordelektrik eines Fahrzeugs. Der oder die elektrischen Leiter der einzelnen Funktionselemente können jeweils einzeln mit einem oder mehreren Steckverbindern ausgebildet sein. In einer besonders vorteilhaften Ausgestaltung sind aber die elektrischen Leiter aller Funktionselemente mit einem gemeinsamen Steckverbinder verbunden. So wird die elektrische Verbindung zur externen Elektrik besonders einfach gestaltet. Natürlich sind auch Zwischenlösungen denkbar, bei denen ein Teil der Funktionselemente mit einem gemeinsamen Steckverbinder ausgestattet sind, während andere Funktionselemente über eigene Steckverbinder verfügen.

Unter einem elektrischen Funktionselement wird im allgemeinen Sinne jedes Element verstanden, welche dafür vorgesehen ist, in oder an der Verbundscheibe befestigt zu werden und nach elektrischer Kontaktierung mit einem externen elektrischen Element, insbesondere einem Potential, einer Spannungsquelle oder einer Auswerteelektronik, eine Funktion erfüllen kann. Es handelt sich dabei insbesondere um Sensoren, Sender oder Empfänger, insbesondere Sender oder Empfänger von elektromagnetischer Strahlung oder Schallwellen, oder elektrische Abschirmelemente. Die Funktionselemente sind bevorzugt Regensensoren, Lichtsensoren, Feuchtigkeitssensoren, Temperatursensoren, Schaltflächen, Leuchtdioden, Bildsensoren, Antennen, Displays, Heizelemente, Ultraschallsensoren oder elektrische Abschirmelemente.

Gebräuchliche Beispiele für Sensoren, insbesondere als interne Funktionselemente, sind Lichtsensoren, kapazitive Regensensoren und kapazitive Schaltflächen. Ein Lichtsensor umfasst typischerweise eine oder mehrere Photodioden auf einer Leiterplatte (*printed ciruit board*)*.* Sie erlauben die Messung der Umgebungshelligkeit, beispielsweise um die Fahrzeugbeleuchtet automatisch zu steuern. Kapazitive Schaltflächen eine Flächenelektrode oder zwei spiralartig, kammartig oder mäanderartig miteinander verschachtelte Elektroden. Bei Annährung des Fingers eines Bedieners ändert sich die Kapazität der Flächenelektrode gegen Erde beziehungsweise die Kapazität des von den verschachtelten Elektroden gebildeten Kondensators. Diese Kapazitätsänderung kann von einer Auswerteelektronik gemessen und als Schaltsignal umgesetzt werden. Auf ähnliche Weise misst ein kapazitiver Regensensor die Anwesenheit von Regentropfen auf der Verbundscheibe, um beispielsweise die Scheibenwischer automatisch zu steuern.

Gebräuchlicher Beispiele für Sensoren als externe Funktionselemente sind Feuchtigkeitssensoren, insbesondere Luftfeuchtigkeitssensoren, oder Temperatursensoren.

Gebräuchliche Beispiele für Sender als interne oder externe Funktionselemente sind Leuchtdioden, insbesondere LEDs oder OLEDs, die nach innen gerichtet als Anzeigeelemente oder Beleuchtung dienen.

Elektrische Abschirmelemente sind typischerweise Metallfolien oder -platten, die bevorzugt extern mit einem Bezugspotenzial verbunden und dadurch geerdet sind. Abschirmelemente werden typischerweise zwischen zwei weiteren Funktionselementen angeordnet, um Interferenzen oder Kopplungen zwischen ihnen zu vermeiden.

In einer besonders bevorzugten Ausgestaltung umfasst das Bauteil genau drei Funktionselemente, nämlich ein externes Funktionselement und zwei interne Funktionselemente. Gemäß der vorstehend beschriebenen Nummerierung sind die ersten beiden Funktionselemente interne Funktionselemente und das dritte Funktionselement das externe Funktionselement. Das zweite, interne Funktionselement, angeordnet zwischen dem externen und dem anderen internen Funktionselement, ist als elektrisches Abschirmelement ausgebildet. Das elektrische Abschirmelement ist insbesondere dafür vorgesehen, zwischen der Innenscheibe und der thermoplastischen Zwischenschicht positioniert zu werden. Das erste, interne Funktionselement ist beispielsweise als Regensensor oder Lichtsensor ausgebildet und dafür vorgesehen, am nächsten zur Außenscheibe der Verbundscheibe positioniert zu werden, insbesondere zwischen Außenscheibe und thermoplastischer Zwischenschicht. Das dritte, externe Funktionselement ist beispielsweise als Feuchtigkeits- oder Temperatursensor ausgebildet und dafür vorgesehen, äußerlich an der Innenscheibe der Verbundscheibe angebracht zu werden.

Die elektrischen Leiter der Funktionselemente sind bevorzugt als sogenannte Flachleiter oder Folienleiter ausgebildet, also als Streifen einer elektrisch leitfähigen Folie, beispielsweise Kupferfolie, insbesondere verzinnten Kupferfolie. Es können auch andere elektrisch leitende Materialien verwendet werden, die sich zu Folien verarbeiten lassen. Beispiele hierfür sind Aluminium, Gold, Silber oder Zinn und Legierungen davon. Die Dicke der Flachleiter beträgt typischerweise von 0,03 mm bis 0,2 mm und die Breite beispielsweise 2 mm bis 60 mm. Sie eigenen sich insbesondere für interne Funktionselemente, weil sie aufgrund ihrer geringen Höhenausdehnung einfach aus der Verbundscheibe herausgeführt werden können. Grundsätzlich können aber auch andere Arten von Leitern verwendet werden, beispielsweise Rundleiter wie Drahtlitzenleiter oder Volldrahtleiter, insbesondere für externe Funktionselemente. Ebenso ist es möglich, einen Flachleiter mit einem Rundleiter zu einem elektrischen Leiter zu verbinden, wobei der Flachleiterabschnitt mit dem (internen) Funktionselement verbunden ist und dafür vorgesehen ist, in die Verbundscheibe einlaminiert zu werden und sich über ihre Seitenkante zu erstrecken.

Die isolierende Ummantelung um die elektrischen Leiter ist bevorzugt aus einem polymeren Material ausgebildet, wobei alternativ aber auch beispielsweise Keramiken oder Glas denkbar sind. Geeignete polymere isolierende Materialien sind beispielsweise Polyethylen, Polyimid, Polyvinylchlorid, Polytetrafluorethylen, Polyester, Epoxidharze, Polyurethanharze oder Silikonelastomere. Typische Dicken der isolierenden Ummantelung betragen von 0,01 mm bis 0,1 mm. Im Bündelbereich der Verkabelung sollte die gemeinsame Isolierende Ummantelung in einer bevorzugten Ausgestaltung eine Dicke von mindestens 0,05 mm aufweisen. Damit wird neben der elektrischen Isolierung auch eine vorteilhafte mechanisch stabile Integrität des erfindungsgemäßen Bauteils erreicht. Mit Dicke ist hierbei der Abstand der äußeren Grenze der Ummantelung zu den ihr am nächsten liegenden leitfähigen Strukturen innerhalb der Verkabelung gemeint.

Die elektrischen Leiter des Bauteils sind bevorzugt vollständig von isolierender Ummantelung umgeben. In den Individualbereichen der Verkabelung verläuft mindestens ein elektrischer Leiter eines Funktionselements in einer isolierenden Ummantelung. Ist das Funktionselement mit mehreren Leitern verbunden, die bevorzugt vollständig oder größtenteils als Flachleiter ausgebildet sind, so können die einzelnen Leiter bevorzugt nebeneinander und/oder übereinander verlaufen (bezogen auf die Breitenausdehnung der Folienstreifen). In einer bevorzugten Ausgestaltung verlaufen alle Leiter desselben Funktionselements nebeneinander. Der Bereich zwischen den einzelnen Leitern ist bevorzugt mit dem Material der isolierenden Ummantelung verfüllt.

Im Bündelbereich und in etwaigen Teilbündelbereichen der Verkabelung verlaufen die elektrischen Leiter mehrerer Funktionselemente in einer gemeinsamen isolierenden Ummantelung. Die Leiter sind bevorzugt vollständig oder größtenteils als Flachleiter ausgebildet. In einer bevorzugten Ausgestaltung verlaufen alle Leiter desselben Funktionselements nebeneinander (bezogen auf die Breitenausdehnung der Folienstreifen). Die Gesamtheit der Leiter verschiedener Funktionselemente können in einer Ebene nebeneinander oder übereinander verlaufen. In einer bevorzugten Ausgestaltung ist zwischen benachbarten Leitern verschiedener Funktionselemente, ob sie nebeneinander oder übereinander verlaufen, eine elektrische Abschirmung angeordnet. Die Abschirmungen können als elektrisch leitfähige Folienstreifen ausgebildet sein, die bevorzugt zum Anschluss an ein elektrisches Bezugspotential vorgesehen und dazu mit einem Steckverbinder versehen sind. Der Bereich zwischen den einzelnen Leitern ist bevorzugt mit dem Material der isolierenden Ummantelung verfüllt.

Ist der Bereich zwischen einzelnen Leitern mit isolierendem Material verfüllt, so ist diese Verfüllung bevorzugt einstückig mit der isolierenden Ummantelung ausgebildet. Dies gilt für die Individualbereiche, etwaige Teilbündelbereich und den Bündelbereich.

Oberhalb und unterhalb der Gesamtheit aller elektrischen Leiter und etwaiger Abschirmungen sind bevorzugt eine obere und eine untere Gesamtabschirmung abgeordnet, die bevorzugt als leitfähige Folienstreifen oder Platten ausgebildet sind und ebenfalls bevorzugt zum Anschluss an ein elektrisches Bezugspotential vorgesehen und dazu mit einem Steckverbinder versehen sind.

Die Erfindung umfasst ein Verfahren zur Herstellung einer Verbundscheibe, wobei
(a) eine erste Scheibe, eine zweite Scheibe, mindestens eine thermoplastische Folie und ein wie zuvor beschriebes Bauteil bereitgestellt werden,
(b) die erste Scheibe und die zweite Scheibe mit dazwischenliegender Folie flächig zu einem Stapel übereinander angeordnet werden, wobei zumindest ein elektrisches Funktionselement des Bauteils zwischen der Folie und einer der Scheiben angeordnet wird und wobei der Bündelabschnitt, in dem alle elektrischen Leiter von einer gemeinsamen isolierenden Ummantelung umgeben sind, außerhalb des Stapels angeordnet wird,
(c) die erste Scheibe über die Folie mit der zweiten Scheibe durch Lamination zur Verbundscheibe verbunden wird.

Die thermoplastische Folie kann einstückig bereitgestellt werden, um die gesamte thermoplastische Zwischenschicht der Verbundscheibe zu bilden. Es ist aber auch möglich, mehrere Folienabschnitte bereitzustellen, die zur Zwischenschicht zusammengesetzt werden. In diesem Fall können die Funktionselemente des Bauteils um einen solchen Folienabschnitt angeordnet werden, welcher anschließend in den Stapel eingesetzt wird, beispielsweise passgenau in einen Ausschnitt einer Restfolie. Der besagte Folienabschnitt kann auch eine geringe Dicke aufweisen als die Restfolie, um die Dicke der Funktionselemente auszugleichen.

In einer vorteilhaften Ausführung werden die elektrischen Funktionselemente in derart im Stapel angeordnet, dass sie einander in der fertigen Verbundscheibe überlappen. Das bedeutet, dass sie in Durchsicht durch die Verbundscheiben zumindest teilweise in Deckung hintereinander angeordnet sind. Die Zuleitungen der Funktionselemente sind dazu geeignet bemessen, also die Individualabschnitte und etwaige Teilbündelabschnitte der Verkabelung.

Die Länge der Individualabschnitte und etwaiger Teilbündelabschnitt sind dabei unter Berücksichtigung der Dicken der Bestandteile der Verbundscheibe (Einzelscheiben und Folie) so gewählt, dass sie möglichst ohne Verwerfungen, Faltenbildung und ähnliches direkt zum Bündelabschnitt verlaufen, wenn die Funktionselemente am vorgesehen Einsatzort angeordnet sind.

In einer vorteilhaften Ausführung umfasst das Bauteil ein externes Funktionselement, welches an einer der von der Folie abgewandten Oberflächen der ersten oder der zweiten Scheibe befestigt wird, bevorzugt an der innenraumseitigen Oberfläche der Innenscheibe. Die Befestigung erfolgt bevorzugt mit einem Klebstoff, beispielsweise einer Schicht einer Klebemasse oder einem doppelseitigen Klebeband. Die Befestigung kann vor oder nach der Lamination des Stapels zur Verbundscheibe erfolgen. Neben dem externen Funktionselement kann auch sein Individualabschnitt der Verkabelung mit einem Kleber an der Scheibenoberfläche befestigt werden.

In einer bevorzugten Ausführung umfasst das Bauelement mindestens zwei interne elektrische Funktionselemente zur Einlagerung in die Verbundscheibe und mindestens ein externes elektrisches Funktionselement zur äußerlichen Befestigung an der Verbundscheibe. Ein internes Funktionselement wird zwischen der ersten Scheibe und der Folie, ein internes Funktionselement zwischen der zweiten Scheibe und der Folie und das externe Funktionselement mit einem Kleber an der von der Folie abgewandten Oberfläche der zweiten Scheibe angeordnet. Die erste Scheibe ist bevorzugt die Außenscheibe und die zweite Scheibe die Innenscheibe. Das Funktionselement zwischen der zweiten Scheibe und der Folie ist bevorzugt als ein elektrisches Abschirmelement zur elektrischen Abschirmung der beiden anderen Funktionselemente ausgebildet.

Die erste und die zweite Scheibe bestehen bevorzugt aus Glas, besonders bevorzugt Kalk-Natron-Glas, was sich für Fenstergläser bewährt hat. Die Scheiben können aber auch aus anderen Glassorten bestehen, beispielsweise Borosilikatglas oder Aluminosilikatglas. Die Scheiben können grundsätzlich alternativ aus Kunststoff gefertigt sein, insbesondere Polycarbonat (PC) oder Polymethylmethacrylat (PMMA).

Die Dicke der Scheiben kann breit variieren und so hervorragend den Erfordernissen im Einzelfall angepasst werden. Vorzugsweise betragen die Dicken der ersten und der zweiten Scheibe von 0,5 mm bis 10 mm, besonders bevorzugt von 1 mm bis 5 mm, ganz besonders bevorzugt von 1,2 mm bis 3 mm.

Die Scheiben können in einer oder in mehreren Richtungen des Raumes gebogen sein, wie es für Kraftfahrzeugscheiben üblich ist, wobei typische Krümmungsradien im Bereich von etwa 10 cm bis etwa 40 m liegen. Dazu werden die beiden Scheiben bevorzugt vor dem Laminieren einem Biegeprozess unterzogen, beispielsweise durch Schwerkraftbiegen, Saugbiegen und/oder Pressbiegen. Typische Biegetemperaturen betragen von 500°C bis 700°C.

Der Verbundscheibe kann einen peripheren Abdeckdruck aufweisen, wie er für Kraftfahrzeugscheiben üblich ist. Ein solcher Abdeckdruck kann auch verwendet werden, um die Funktionselemente zu verstecken oder zu kaschieren. Ein solcher opaker Abdeckdruck wird auf den Randbereich mindestens einer der beiden Scheiben, bevorzugt beider Scheiben aufgebracht. Dazu wird typischerweise eine schwarze oder dunkle Emaille per Siebdruck aufgebracht und vor dem Laminieren, insbesondere vor dem Biegen oder während des Biegens, eingebrannt.

Die thermoplastische Folie, welche die Zwischenschicht der Verbundscheibe ausbilden soll, enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke einer thermoplastischen Folie beträgt bevorzugt von 0,2 mm bis 2 mm, besonders bevorzugt von 0,3 mm bis 1 mm, beispielsweise 0,76 mm. Die Zwischenschicht kann auch aus mehreren aufeinander angeordneten thermoplastischen Folien ausgebildet werden, wobei es möglich ist, die Funktionselemente zwischen zwei solcher Folien zu positionieren.

Die Scheiben und die thermoplastische Folie können unabhängig voneinander klar und farblos, aber auch getönt, getrübt oder gefärbt sein. Die Gesamttransmission durch die Verbundscheibe beträgt in einer bevorzugten Ausgestaltung größer 70%, insbesondere wenn die Verbundscheibe eine Windschutzscheibe ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Scheiben können aus nicht vorgespanntem, teilvorgespanntem oder vorgespanntem Glas bestehen.

Die Lamination der Scheiben zur Verbundscheibe erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon.

Die Verbindung von erster und zweiter Scheibe dabei erfolgt üblicherweise unter Einwirkung von Hitze, Vakuum und/oder Druck.

Die Erfindung umfasst außerdem eine Verbundscheibe, ausgestattet mit einem oben beschriebenen Bauteil beziehungsweise eine mit dem erfindungsgemäßen Verfahren herstellbare Verbundscheibe. Dabei ist mindestens ein Funktionselement zwischen den Einzelscheiben angeordnet, und der Bundelabschnitt (G) ist außerhalb der Verbundscheibe(W) angeordnet. In einer besonders bevorzugten Ausgestaltung ist ein erstes Funktionselement zwischen erster Scheibe (bevorzugt Außenscheibe) und thermoplastischer Zwischenschicht, ein zweites Funktionselement zwischen zweiter Scheibe (bevorzugt Innenscheibe) und thermoplastischer Zwischenschicht und ein drittes Funktionselement außenseitig an der zweiten Scheibe angebracht. Das zweite Funktionselement ist dabei bevorzugt ein elektrisches Abschirmelement zur Entkopplung der beiden anderen Funktionselemente.

Im Folgenden wird die Erfindung anhand einer Zeichnung und Ausführungsbeispielen näher erläutert. Die Zeichnung ist eine schematische Darstellung und nicht maßstabsgetreu.

Es zeigen:
- Fig. 1: eine Draufsicht auf eine Ausgestaltung des Bauteils,
- Fig. 2: einen Querschnitt entlang A-A' durch das Bauteil aus Fig. 1,
- Fig. 3: eine Draufsicht auf eine Verbundscheibe, ausgestattet mit Bauteil, und
- Fig. 4: einen Querschnitt entlang B-B' durch die Verbundscheibe aus Fig. 3.

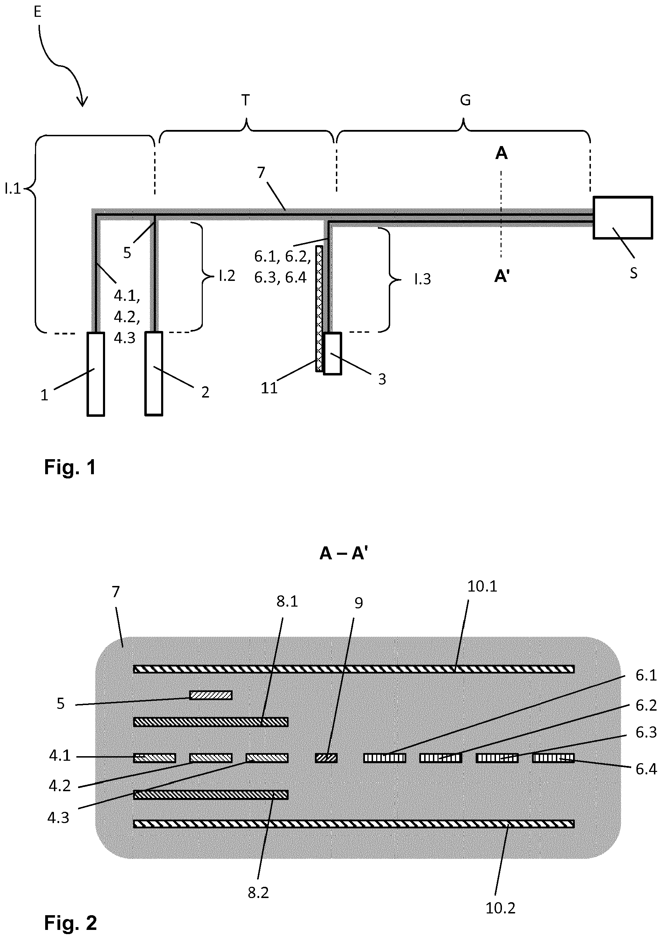

Figur 1 zeigt eine schematische Darstellung einer Ausgestaltung des Bauteils E zur Fertigung einer Verbundscheibe, insbesondere einer Windschutzscheibe für ein Kraftfahrzeug. Das Bauteil umfasst drei elektrische Funktionselemente 1, 2, 3. Das erste elektrische Funktionselement 1 ist ein kapazitiver Regensensor und dafür vorgesehen, als internes Funktionselement zwischen die Außenscheibe und die thermoplastische Zwischenschicht einer Verbundscheibe einlaminiert zu werden. Das zweite Funktionselement 2 ist ein elektrisches Abschirmelement und dafür vorgesehen, als internes Funktionselement zwischen die Innenscheibe und die thermoplastische Zwischenschicht der Verbundscheibe einlaminiert zu werden. Das dritte Funktionselement 3 ist ein Feuchtigkeitssensor und dafür vorgesehen, als externes Funktionselement an der innenraumseitigen Oberfläche der Innenscheibe angebracht zu werden. Das zweite Funktionselement 2 soll als Abschirmelement Interferenzen, Kopplungen ("Übersprechen") und andere Störungen zwischen den beiden anderen Funktionselementen 1, 3 verhindern.

Neben den Funktionselementen 1, 2, 3 umfasst das Bauteil eine Verkabelung, welche die mit den Funktionselementen 1, 2, 3 verbundenen elektrischen Leiter und deren isolierende Ummantelung 7 umfasst. An das erste Funktionselement 1 sind drei Leiter 4.1, 4.2, 4.3 angeschlossen, an das zweite Funktionselement 2 ein Leiter 5 und an das dritte Funktionselement 3 vier Leiter 6.1, 6.2, 6.3, 6.4. Die Leiter 4.1, 4.2, 4.3; 5; 6.1, 6.2, 6.3, 6.4 sind aus Streifen einer verzinnten Kupferfolie als Flachleiter ausgebildet.

Die Verkabelung des Bauteils E ist in verschiedene Abschnitte unterteilt. Sie umfasst einen sogenannten Bündelabschnitt G, in dem die Leiter 4.1, 4.2, 4.3; 5; 6.1, 6.2, 6.3, 6.4 aller Funktionselemente 1, 2, 3 von einer gemeinsamen isolierenden Ummantelung 7 umgeben sind. Der Bündelabschnitt G bündelt gleichsam die drei Funktionselemente 1, 2, 3 mit ihren zugehörigen Leitern 4.1, 4.2, 4.3; 5; 6.1, 6.2, 6.3, 6.4 zu einem einzelnen Bauteil E. Am von den Funktionselementen 1, 2, 3 abgewandten Ende des Bündelabschnitts G sind die Leiter 4.1, 4.2, 4.3; 5; 6.1, 6.2, 6.3, 6.4 mit einem gemeinsamem Steckverbinder S ausgestattet, mit dem das gesamte Bauteil E mit der Bordelektrik des Fahrzeugs verbunden werden kann.

Ausgehend vom Bündelabschnitt G wird die Verkabelung verzweigt in einen sogenannten Individualabschnitt I.3 des dritten Funktionselements 3 und einen sogenannten Teilbündelabschnitt T des ersten und zweiten Funktionselements 1, 2. Im Individualabschnitt I.3 sind nur die Leiter 6.1, 6.2, 6.3, 6.4 des dritten Funktionselements 3 enthalten mit einer isolierenden Ummantelung 7. An den Individualabschnitt I.3 schließt sich das dritte Funktionselement 3 an. Im Teilbündelabschnitt T sind die Leiter 4.1, 4.2, 4.3, 5 des ersten und zweiten Funktionselements 1, 2 in einer gemeinsamen isolierenden Ummantelung 7 enthalten. Am Ende des Teilbündelabschnitts T wird die Verkabelung abermals verzweigt in einen Individualabschnitt I.2 des zweiten Funktionselements 2 und einen Individualabschnitt I.1 des ersten Funktionselements 1. Im Individualabschnitt I.1 sind nur die Leiter 4.1, 4.2, 4.3 des ersten Funktionselements 1 enthalten und im Individualabschnitt I.2 nur der Leiter 5 des zweiten Funktionselements 2, jeweils mit einer isolierenden Ummantelung 7.

Das dritte Funktionselement 3 und sein Individualabschnitt I.3 sind mit einem Klebstoff 11 versehen zur einfachen Befestigung an der Verbundscheibe. Durch die Bündelung der drei Funktionselemente 1, 2 ,3 zu einem einzelnen Bauteil E wird die Herstellung der Verbundscheibe wesentlich vereinfacht. Es ist nicht mehr notwendig, die Funktionselemente einzelnen im Verbund zu positionieren und zu befestigen. Stattdessen muss nur mit einem Bauteil E umgegangen werden, dessen Individualabschnitte I.1, I.2, I.3 und dessen Teilbündelabschnitt T die relative Anordnung der Funktionselemente 1, 2 ,3 zueinander festlegt. Die Individualabschnitte I.1, I.2, I.3 und der Teilbündelabschnitt T sind dabei so bemessen, dass die Funktionselemente 1, 2, 3 in der Verbundscheibe überlappen, also in Deckung zueinander angeordnet sind.

Figur 2 zeigt einen Querschnitt durch den Bündelabschnitt G des Bauteils aus Figur 1. Die elektrischen Leiter 4.1, 4.2, 4.3 des ersten Funktionselements 1 sind in einer Ebene nebeneinander angeordnet (bezogen auf die Breitendimension der Flachleiter). Ebenso sind die elektrischen Leiter 6.1, 6.2, 6.3, 6.4 des dritten Funktionselements 3 in einer Ebene nebeneinander angeordnet. Die Gesamtheit der Leiter 4.1, 4.2, 4.3 und die Gesamtheit der Leiter 6.1, 6.2, 6.3, 6.4 sind ebenfalls nebeneinander in derselben Ebene angeordnet.

Zwischen den Leitern 4.1, 4.2, 4.3 einerseits und den Leitern 6.1, 6.2, 6.3, 6.4 andererseits ist eine Abschirmung 9 angeordnet, die die Leitergruppen entkoppelt.

Der Leiter 5 dient zum Erden des zweiten Funktionselements 2. Er ist in einer anderen Ebene oberhalb der Leiter 4.1, 4.2, 4.3 angeordnet. Zwischen dem Leiter 5 einerseits und den Leitern 4.1, 4.2, 4.3 ist zur Entkopplung eine Abschirmung 8.1 angeordnet. Auch unterhalb der Leiter 4.1, 4.2, 4.3 ist eine Abschirmung 8.2 angeordnet. Die Abschirmungen 8.1, 8.2 erstrecken sich über die Gesamtbreite der Leiter 4.1, 4.2, 4.3. Die Abschirmungen 8.1, 8.2 sind bevorzugt über den Steckverbinder S geerdet. Auch die Abschirmung 9 ist bevorzugt geerdet, entweder ebenfalls über den Steckverbinder S oder durch eine nicht dargestellte Verbindung zu den Abschirmungen 8.1, 8.2.

Oberhalb und unterhalb der Gesamtheit aller elektrischen Leiter 4.1, 4.2, 4.3; 5; 6.1, 6.2, 6.3, 6.4 und der internen Abschirmungen 8.1, 8.2, 9 sind Gesamtabschirmung 10.1, 10.2 angeordnet, die sich über die Gesamtbreite der Leiter 4.1, 4.2, 4.3; 5; 6.1, 6.2, 6.3, 6.4 und internen Abschirmungen 8.1, 8.2, 9 erstrecken. Die Gesamtabschirmung 10.1, 10.2 dienen der Entkopplung von externen Einflüssen und sind wiederum bevorzugt über den Steckverbinder S geerdet. Alle Leiter und Abschirmungen sind in polymeres Material einfasst, welches die isolierende Ummantelung 7 bildet und die Zwischenräume verfüllt.

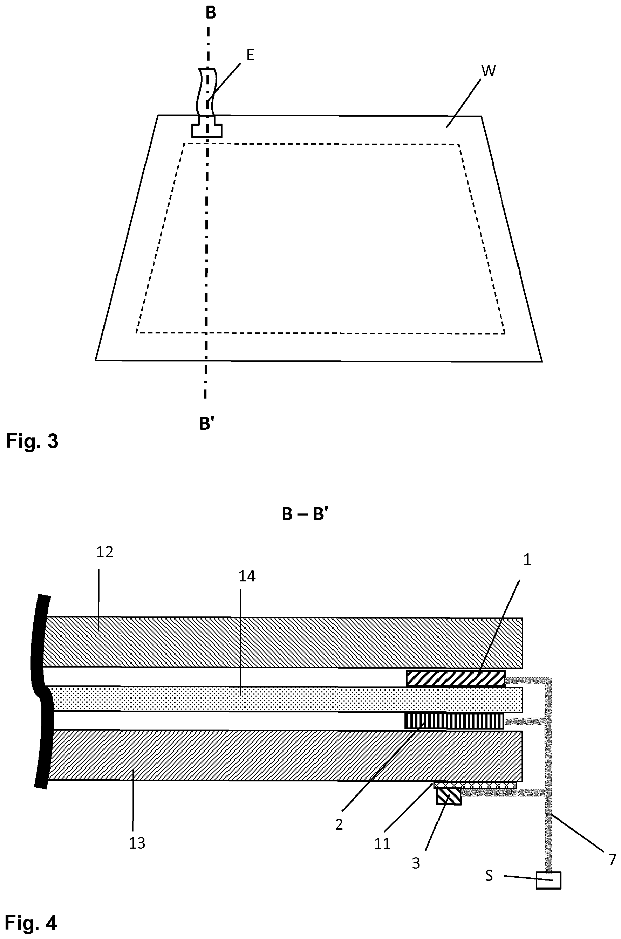

Figur 3 zeigt eine Verbundscheibe W mit dem Bauteil E. Die Verbundscheibe W ist als Windschutzscheibe eines Kraftfahrzeugs vorgesehen und das Bauteil E ist außerhalb des zentralen Sichtbereichs angeordnet, der durch eine gestrichelte Linie angedeutet ist. Mit dem ersten Funktionselement 1 (Regensensor) kann die Anwesenheit von Wassertropfen auf der Außenscheibe gemessen werden, um die Scheibenwischer in Abhängigkeit davon automatisch in Betrieb zu setzen. Mit dem dritten Funktionselement 3 (Feuchtigkeitssensor) kann die relative Luftfeuchte im Fahrzeuginneren gemessen werden und beispielsweise die Klimaautomatik daran angepasst werden.

Figur 4 zeigt einen Querschnitt durch die Verbundschiebe W aus Figur 3. Die Verbundscheibe W besteht aus einer Außenscheibe 12, einer Innenscheibe 13 und einer dazwischen angeordneten thermoplastischen Folie 14. Die Bestandteile sind der besseren Übersichtlichkeit halber beabstandet voneinander dargestellt, so dass die Figur eher den Schichtstapel vor der Lamination repräsentiert als die fertiggestellte Windschutzscheibe. Die Außenscheibe 12 und die Innenscheibe 13 bestehen aus Kalk-Natron-Glas und weisen eine Dicke von beispielsweise 2,1 mm auf. Die Folie 14 besteht aus weichmacherhaltigem PVB mit einer Dicke von 0,76 mm.

Das erste Funktionselement 1 ist zwischen Außenscheibe 12 und Folie 14 angeordnet, das zweite Funktionselement 13 zwischen Innenscheibe 13 und Folie 14 und das dritte Funktionselement 3 an der innenraumseitigen, von der Außenscheibe 12 abgewandten Oberfläche der Innenscheibe 13 über den Klebstoff 11. Die Funktionselemente 1, 2, 3 sind überlappend angeordnet, so dass sie bei Durchsicht durch die Verbundscheibe W in Deckung angeordnet sind.

### Bezugszeichenliste:

(E) Bauteil für die Fertigung einer Verbundscheibe
(1) erstes elektrisches Funktionselement
(2) zweites elektrisches Funktionselement
(3) drittes elektrisches Funktionselement
(4.1), (4.2), (4.3) elektrische Leiter des ersten elektrischen Funktionselements 1
(5) elektrischer Leiter des zweiten elektrischen Funktionselements 2
(6.1), (6.2), (6.3), (6.4) elektrische Leiter des dritten elektrischen Funktionselements 3
(7) isolierende Ummantelung
(8.1), (8.2) Abschirmung zwischen elektrischen Leitern verschiedener Ebenen
(9) Abschirmung zwischen elektrischen Leitern derselben Ebene
(10.1), (10.2) obere und untere Gesamtabschirmung
(11) Klebstoff
(G) Bündelabschnitt der Verkabelung
(T) Teilbündelabschnitt der Verkabelung
(I.1) Individualabschnitt des Funktionselements 1
(I.2) Individualabschnitt des Funktionselements 2
(I.3) Individualabschnitt des Funktionselements 3
(S) Steckverbinder
(W) Verbundscheibe
(12) erste Scheibe
(13 zweite Scheibe
(14) thermoplastische Folie
A - A' Schnittlinie
B - B' Schnittlinie

## Patentansprüche

1. Verfahren zur Herstellung einer Verbundscheibe (W), wobei
(a) eine erste Scheibe (12), eine zweite Scheibe (13), mindestens eine thermoplastische Folie (14) und ein Bauteil (E) bereitgestellt werden, wobei das Bauteil (E) mindestens zwei elektrische Funktionselemente (1, 2, 3) umfasst und eine Verkabelung, welche mit jeweils einem elektrischen Funktionselement (1, 2, 3) verbundene elektrische Leiter (4.1, 4.2, 4.3; 5; 6.1, 6.2, 6.3, 6.4) mit isolierender Ummantelung umfasst, wobei die Verkabelung einen Bündelabschnitt (G) aufweist, in dem alle elektrischen Leiter (4.1, 4.2, 4.3; 5; 6.1, 6.2, 6.3, 6.4) von einer gemeinsamen isolierenden Ummantelung (7) umgeben sind,
(b) die erste Scheibe (12) und die zweite Scheibe (13) mit dazwischenliegender Folie (14) flächig zu einem Stapel übereinander angeordnet werden, wobei zumindest ein elektrisches Funktionselement (1, 2) des Bauteils (E) zwischen der Folie (14) und einer der Scheiben (12, 13) angeordnet wird und wobei der Bündelabschnitt (G) außerhalb des Stapels angeordnet wird,
(c) die erste Scheibe (12) über die Folie (14) mit der zweiten Scheibe (13) durch Lamination zur Verbundscheibe (W) verbunden wird.

2. Verfahren nach Anspruch 1, wobei die elektrischen Funktionselemente (1, 2, 3) derart angeordnet werden, dass sie einander in der Verbundscheibe (W) überlappen.

3. Verfahren nach Anspruch 1 oder 2, wobei zumindest ein elektrisches Funktionselement (3) des Bauteils (E) an der von der thermoplastischen Folie (14) abgewandten Oberfläche einer der Scheiben (12, 13) mit einem Klebstoff (11) befestigt wird.

4. Verfahren nach Anspruch 3, wobei das Bauelement (E) mindestens zwei interne elektrische Funktionselemente (1, 2) zur Einlagerung in die Verbundscheibe (W) umfasst und mindestens ein externes elektrisches Funktionselement (3) zur äußerlichen Befestigung an der Verbundscheibe (W), und wobei ein internes Funktionselement (1) zwischen der ersten Scheibe (12) und der Folie (14), ein internes Funktionselement (2) zwischen der zweiten Scheibe (13) und der Folie (14) und das externe Funktionselement (3) mit einem Kleber (11) an der von der Folie (14) abgewandten Oberfläche der zweiten Scheibe (13) angeordnet wird, und wobei das Funktionselement (2) zwischen der zweiten Scheibe (13) und der Folie (14) als elektrisches Abschirmelement zur elektrischen Abschirmung der beiden anderen Funktionselemente (1, 3) ausgebildet ist.

5. Verfahren nach einem der Ansprüche 1 bis 4, wobei die Verkabelung für jedes elektrische Funktionselement (1, 2, 3) einen zugeordneten Individualabschnitt (I.1, I.2, I.3) umfasst, der sich an das jeweilige elektrische Funktionselement (1, 2, 3) anschließt und in dem der oder die elektrischen Leiter (4.1, 4.2, 4.3; 5; 6.1, 6.2, 6.3, 6.4) des besagten Funktionselements (1, 2, 3) von einer eigenen isolierenden Ummantelung (7) umgeben sind, welche keine elektrischen Leiter (4.1, 4.2, 4.3; 5; 6.1, 6.2, 6.3, 6.4) des oder der übrigen Funktionselemente (1, 2, 3) umgibt.

6. Verfahren nach Anspruch 5, welches mindestens drei elektrische Funktionselemente (1, 2, 3) aufweist, wobei sich an den Bündelabschnitt (G) der Individualabschnitt (I.3) eines Funktionselements (3) anschließt und ein Teilbündelabschnitt (T), in dem die elektrischen Leiter (4.1, 4.2, 4.3; 5) der übrigen Funktionselemente (1, 2) von einer gemeinsamen isolierenden Ummantelung (7) umgeben sind.

7. Verfahren nach einem der Ansprüche 1 bis 6, wobei die von den Funktionselementen (1, 2, 3) abgewandten Enden der Leiter (4.1, 4.2, 4.3; 5; 6.1, 6.2, 6.3, 6.4) mit mindestens einem Steckverbinder (S) verbunden sind, bevorzugt mit einem einzigen gemeinsamen Steckverbinder (S).

8. Verfahren nach einem der Ansprüche 1 bis 7, wobei die elektrischen Funktionselemente (1, 2, 3) als Sensoren, Sender oder elektrische Abschirmelemente ausgebildet sind, bevorzugt als Regensensoren, Lichtsensoren, Luftfeuchtigkeitssensoren, Temperatursensoren, Schaltflächen, Leuchtdioden, Bildsensoren, Antennen, Displays, Heizelemente, Ultraschallsensoren oder elektrische Abschirmelemente.

9. Verfahren nach einem der Ansprüche 1 bis 8, wobei die elektrischen Leiter (4.1, 4.2, 4.3; 5; 6.1, 6.2, 6.3, 6.4) zumindest teilweise als Flachleiter ausgebildet sind.

10. Verfahren nach einem der Ansprüche 1 bis 9, wobei die Verkabelung außerdem elektrische Abschirmungen umfasst zur Entkopplung der elektrischen Leiter (4.1, 4.2, 4.3; 5; 6.1, 6.2, 6.3, 6.4) verschiedener Funktionselemente (1, 2, 3).

11. Verbundscheibe (W), ausgestattet mit einem Bauteil (E),
wobei die Verbundscheibe (W) eine erste Scheibe (12) und eine zweite Scheibe (13) umfasst, die über mindestens eine thermoplastische Folie (14) miteinander verbunden sind,
und wobei das Bauteil (E) mindestens zwei elektrische Funktionselemente (1, 2, 3) umfasst und eine Verkabelung, welche mit jeweils einem elektrischen Funktionselement (1, 2, 3) verbundene elektrische Leiter (4.1, 4.2, 4.3; 5; 6.1, 6.2, 6.3, 6.4) mit isolierender Ummantelung umfasst, wobei die Verkabelung einen Bündelabschnitt (G) aufweist, in dem alle elektrischen Leiter (4.1, 4.2, 4.3; 5; 6.1, 6.2, 6.3, 6.4) von einer gemeinsamen isolierenden Ummantelung (7) umgeben sind,
und wobei zumindest ein elektrisches Funktionselement (1, 2) des Bauteils (E) zwischen der Folie (14) und einer der Scheiben (12, 13) angeordnet ist und wobei der Bündelabschnitt (G) außerhalb der Verbundscheibe (W) angeordnet ist.

## Claims

1. Method for producing a laminated pane (W), wherein
(a) a first pane (12), a second pane (13), at least one thermoplastic film (14) and a component (E) are provided, wherein the component (E) comprises at least two electrical functional elements (1, 2, 3) and cabling which comprises electrical conductors (4.1, 4.2, 4.3; 5; 6.1, 6.2, 6.3, 6.4) which have insulating sheathing and are each connected to an electrical functional element (1, 2,3), wherein the cabling has a bundling portion (G) in which all electrical conductors (4.1, 4.2, 4.3; 5; 6.1, 6.2, 6.3, 6.4) are surrounded by a common insulating sheathing (7),
(b) the first pane (12) and the second pane (13) with the film (14) therebetween are arranged flat one above the other to form a stack, wherein at least one electrical functional element (1, 2) of the component (E) is arranged between the film (14) and one of the panes (12, 13) and wherein the bundling portion (G) is arranged outside the stack,
(c) the first pane (12) is connected, via the film (14), to the second pane (13) by lamination to form the laminated pane (W).

2. Method according to claim 1, wherein the electrical functional elements (1, 2, 3) are arranged such that they overlap one another in the laminated pane (W).

3. Method according to either claim 1 or claim 2, wherein at least one electrical functional element (3) of the component (E) is attached to the surface of one of the panes (12, 13) facing away from the thermoplastic film (14) using an adhesive (11).

4. Method according to claim 3, wherein the component (E) comprises at least two internal electrical functional elements (1, 2) for incorporation into the laminated pane (W) and at least one external electrical functional element (3) for external attachment to the laminated pane (W), and wherein an internal functional element (1) is arranged between the first pane (12) and the film (14), an internal functional element (2) is arranged between the second pane (13) and the film (14), and the external functional element (3) is arranged, using an adhesive (11), on the surface of the second pane (13) facing away from the film (14), and wherein the functional element (2) between the second pane (13) and the film (14) is designed as an electrical shielding element for electrically shielding the other two functional elements (1, 3).

5. Method according to any of claims 1 to 4, wherein the cabling comprises, for each electrical functional element (1, 2, 3), an associated individual portion (1.1, 1.2, 1.3) which adjoins the relevant electrical functional element (1, 2, 3) and in which the electrical conductor(s) (4.1, 4.2, 4.3; 5; 6.1, 6.2, 6.3, 6.4) of said functional element (1, 2, 3) are surrounded by their own insulating sheathing (7) which does not surround any electrical conductors (4.1, 4.2, 4.3; 5; 6.1, 6.2, 6.3, 6.4) of the remaining functional element(s) (1, 2, 3).

6. Method according to claim 5, which comprises at least three electrical functional elements (1, 2, 3), wherein adjoining the bundling portion (G) is the individual portion (1.3) of a functional element (3), and a partial bundling portion (T), in which the electrical conductors (4.1, 4.2, 4.3; 5) of the remaining functional elements (1, 2) are surrounded by a common insulating sheathing (7).

7. Method according to any of claims 1 to 6, wherein the ends of the conductors (4.1, 4.2, 4.3; 5; 6.1, 6.2, 6.3, 6.4) facing away from the functional elements (1, 2, 3) are connected to at least one plug connector (S), preferably to a single common plug connector (S).

8. Method according to any of claims 1 to 7, wherein the electrical functional elements (1, 2, 3) are designed as sensors, transmitters or electrical shielding elements, preferably as rain sensors, light sensors, humidity sensors, temperature sensors, buttons, light-emitting diodes, image sensors, antennas, displays, heating elements, ultrasonic sensors or electrical shielding elements.

9. Method according to any of claims 1 to 8, wherein the electrical conductors (4.1, 4.2, 4.3; 5; 6.1, 6.2, 6.3, 6.4) are at least partially designed as flat conductors.

10. Method according to any of claims 1 to 9, wherein the cabling further comprises electrical shields for decoupling the electrical conductors (4.1, 4.2, 4.3; 5; 6.1, 6.2, 6.3, 6.4) of various functional elements (1, 2, 3).

11. Laminated pane (W), equipped with a component (E),
wherein the laminated pane (W) comprises a first pane (12) and a second pane (13), which are connected to one another via at least one thermoplastic film (14),
and wherein the component (E) comprises at least two electrical functional elements (1, 2, 3) and cabling which comprises electrical conductors (4.1, 4.2, 4.3; 5; 6.1, 6.2, 6.3, 6.4) which have insulating sheathing and are each connected to an electrical functional element (1, 2, 3), wherein the cabling has a bundling portion (G) in which all electrical conductors (4.1, 4.2, 4.3; 5; 6.1, 6.2, 6.3, 6.4) are surrounded by a common insulating sheathing (7),
and wherein at least one electrical functional element (1, 2) of the component (E) is arranged between the film (14) and one of the panes (12, 13) and wherein the bundling portion (G) is arranged outside the laminated pane (W).

## Revendications

1. Procédé pour la fabrication d'un vitrage feuilleté (W), dans lequel
(a) une première vitre (12), une seconde vitre (13), au moins un film thermoplastique (14) et un composant (E) sont fournis, dans lequel le composant (E) comprend au moins deux éléments fonctionnels électriques (1, 2, 3) et un câblage qui comprend des conducteurs électriques (4.1, 4.2, 4.3 ; 5 ; 6.1, 6.2, 6.3, 6.4) comportant une gaine isolante et reliés à respectivement un élément fonctionnel électrique (1, 2, 3), dans lequel le câblage présente une section de regroupement (G) dans laquelle tous les conducteurs électriques (4.1, 4.2, 4.3 ; 5 ; 6.1, 6.2, 6.3, 6.4) sont entourés par une gaine isolante (7) commune,
(b) la première vitre (12) et la seconde vitre (13) sont superposées à plat avec un film (14) intercalé entre elles pour former un empilement, dans lequel au moins un élément fonctionnel électrique (1, 2) du composant (E) est disposé entre le film (14) et l'une des vitres (12, 13), et dans lequel la section de regroupement (G) est disposée à l'extérieur de l'empilement,
(c) la première vitre (12) est reliée à la seconde vitre (13) par stratification par l'intermédiaire du film (14) pour former le vitrage feuilleté (W).

2. Procédé selon la revendication 1, dans lequel les éléments fonctionnels électriques (1, 2, 3) sont disposés de telle sorte qu'ils se chevauchent les uns les autres dans le vitrage feuilleté (W).

3. Procédé selon la revendication 1 ou 2, dans lequel au moins un élément fonctionnel électrique (3) du composant (E) est fixé sur la surface de l'une des vitres (12, 13), laquelle surface est opposée au film thermoplastique (14), à l'aide d'un adhésif (11).

4. Procédé selon la revendication 3, dans lequel le composant (E) comprend au moins deux éléments fonctionnels électriques internes (1, 2) destinés à être insérés dans le vitrage feuilleté (W) et au moins un élément fonctionnel électrique externe (3) destiné à être fixé extérieurement sur le vitrage feuilleté (W), et dans lequel un élément fonctionnel interne (1) est disposé entre la première vitre (12) et le film (14), un élément fonctionnel interne (2) est disposé entre la seconde vitre (13) et le film (14) et l'élément fonctionnel externe (3) est disposé à l'aide d'un adhésif (11) sur la surface de la seconde vitre (13), laquelle surface est opposée au film (14), et dans lequel l'élément fonctionnel (2) entre la seconde vitre (13) et le film (14) est conçu comme un élément de blindage électrique pour le blindage électrique des deux autres éléments fonctionnels (1, 3).

5. Procédé selon l'une des revendications 1 à 4, dans lequel le câblage comprend, pour chaque élément fonctionnel électrique (1, 2, 3), une section individuelle (1.1, 1.2, 1.3) associée qui se raccorde à l'élément fonctionnel électrique (1, 2, 3) respectif et dans laquelle le ou les conducteurs électriques (4.1, 4.2, 4.3 ; 5 ; 6.1, 6.2, 6.3, 6.4) dudit élément fonctionnel (1, 2, 3) sont entourés par une gaine isolante (7) propre qui n'entoure aucun conducteur électrique (4.1, 4.2, 4.3 ; 5 ; 6.1, 6.2, 6.3, 6.4) du ou des éléments fonctionnels (1, 2, 3) restants.

6. Procédé selon la revendication 5, lequel présente au moins trois éléments fonctionnels électriques (1, 2, 3), dans lequel la section individuelle (I.3) d'un élément fonctionnel (3) se raccorde à la section de regroupement (G) et une section de regroupement partiel (T), dans laquelle les conducteurs électriques (4.1, 4.2, 4.3 ; 5) des autres éléments fonctionnels (1, 2) sont entourés par une gaine isolante (7) commune.

7. Procédé selon l'une des revendications 1 à 6, dans lequel les extrémités des conducteurs (4.1, 4.2, 4.3 ; 5 ; 6.1, 6.2, 6.3, 6.4) opposées aux éléments fonctionnels (1, 2, 3) sont reliées à au moins un connecteur (S), de préférence à un seul connecteur commun (S).

8. Procédé selon l'une des revendications 1 à 7, dans lequel les éléments fonctionnels électriques (1, 2, 3) sont réalisés en tant que capteurs, émetteurs ou éléments de blindage électriques, de préférence en tant que capteurs de pluie, capteurs de lumière, capteurs d'humidité de l'air, capteurs de température, boutons de commande, diodes électroluminescentes, capteurs d'image, antennes, écrans, éléments chauffants, capteurs à ultrasons ou éléments de blindage électriques.

9. Procédé selon l'une des revendications 1 à 8, dans lequel les conducteurs électriques (4.1, 4.2, 4.3 ; 5 ; 6.1, 6.2, 6.3, 6.4) sont au moins partiellement réalisés en tant que conducteurs plats.

10. Procédé selon l'une des revendications 1 à 9, dans lequel le câblage comprend en outre des blindages électriques pour le découplage des conducteurs électriques (4.1, 4.2, 4.3 ; 5 ; 6.1, 6.2, 6.3, 6.4) de différents éléments fonctionnels (1, 2, 3).

11. Vitrage feuilleté (W), équipé d'un composant (E),
dans lequel le vitrage feuilleté (W) comprend une première vitre (12) et une seconde vitre (13) qui sont reliées l'une à l'autre par l'intermédiaire d'au moins un film thermoplastique (14),
et dans lequel le composant (E) comprend au moins deux éléments fonctionnels électriques (1, 2, 3) et un câblage qui comprend des conducteurs électriques (4.1, 4.2, 4.3 ; 5 ; 6.1, 6.2, 6.3, 6.4) comportant une gaine isolante et reliés à respectivement un élément fonctionnel électrique (1, 2, 3), dans lequel le câblage présente une section de regroupement (G) dans laquelle tous les conducteurs électriques (4.1, 4.2, 4.3 ; 5 ; 6.1, 6.2, 6.3, 6.4) sont entourés par une gaine isolante (7) commune,
et dans lequel au moins un élément fonctionnel électrique (1, 2) du composant (E) est disposé entre le film (14) et l'une des vitres (12, 13), et dans lequel la section de regroupement (G) est disposée à l'extérieur du vitrage feuilleté (W).
